# EUROPEAN PATENT SPECIFICATION

(11) **EP 1 776 411 B1**
(45) Date of publication and mention of the grant of the patent: **07.05.2008**
(21) Application number: 05771689.6
(22) Date of filing: 13.07.2005
(51) Int. Cl.: C08J 7/04, C08L 23/02, B23B 27/08, B65D 43/00, B65D 53/00, B32B 27/32

(54) **COMPOSITION COMPRISING ETHYLENE COPOLYMERS AND POLYOLEFINS**
ZUSAMMENSETZUNG, ENTHALTEND ETHYLENCOPOLYMERE UND POLYOLEFINE
COMPOSITION COMPRENANT DES COPOLYMÈRES D'ÉTHYLÈNE ET DES POLYOLÉFINES

(30) Priority: 15.07.2004 US 588297 P
(43) Date of publication of application: 25.04.2007
(73) Proprietor: E.I. du Pont de Nemours and Company, Wilmington, DE 19898 (US)
(72) Inventor: KENDIG, Terrance, D., Newark, Delaware 19711 (US); TANNY, Stephen, R., Newark, Delaware 19711 (US)
(74) Representative: Heinemann, Monica
(86) International application number: PCT/US2005/025005
(87) International publication number: WO 2006/019921

(56) References cited:
- EP-A- 0 857 758
- WO-A-99/52972
- US-A- 4 367 312
- US-A- 4 786 534

## Description

The invention relates to a composition comprising an ethylene copolymers, polyolefin, and a tackifier; to a multilayer structure produced therefrom; and to a package comprising the multilayer structure. The composition can be used for adhesion to impact-modified acrylonitrile-methylacrylate copolymers to other substrates.

### BACKGROUND OF THE INVENTION

The packaging industry uses a variety of films and containers produced from various thermoplastic resins and compositions for packaging food and non-food products. These packages provide protection (e.g., protection from mechanical damage, barriers to air or moisture, etc.) of the product contained within until the consumer is ready to use the product. It is also desirable for the package to be designed to allow the consumer easy access to the product at the appropriate time.

Packages consist of rigid containers made from metal such as aluminum, paper, fiberboard or plastic (for example, polypropylene, crystallized polyethylene terephthalate (CPET) and high-impact polystyrene (HIPS)) with a lidding film sealed to the container. These packages include cups, bottles, blister packs and the like. It is desirable that the seal between the container and the lidding film provide a strong hermetic seal to protect the product and that the seal is easily and cleanly peeled by the consumer.

Materials used in packaging include impact-modified acrylonitrile-methylacrylate copolymers, in which acrylonitrile-methylacrylate copolymers are grafted onto a nitrile rubber. These materials can be used to form rigid containers or flexible films. It is generally difficult to find compositions that provide good adhesion to these impact-modified acrylonitrile-methylacrylate copolymers because of their inherent properties.

There is a need for an improved adhesive material to provide hermetic bonding to acrylonitrile-methylacrylate copolymers and impact-modified and rubber-modified compositions thereof. Such compositions include those in which acrylonitrile-methylacrylate copolymers are grafted onto a nitrile rubber. Acrylonitrile-methylacrylate copolymers such as Barex^{®} from BP Petrochemicals, Inc. (Naperville, IL, USA) provide moisture and oxygen barrier properties, chemical resistance, ultraviolet resistance, and flavor and aroma containment, allowing greater shelf life of the product packaged. There is no polymer known to be effectively used presently for lamination of impact-modified acrylonitrile-methylacrylate copolymers to polyvinyl chloride (PVC) or polyethylene terephthalate (PET) in extrusion processes.

Existing adhesive systems that bond to impact-modified acrylonitrile-methylacrylate copolymers include solvent-borne systems based on, among others, ethylene/vinyl acetate (EVA) copolymers, styrene butadiene or amorphous polyester. The (water-based) adhesives are applied by roller or gravure systems to carrier webs (e.g. 1 mil-thick PVC) and require drying at elevated temperature to remove the solvents and maintain low amounts of residual solvents. The adhesive coatings produced in this manner are generally thin and limited to ingredients that are soluble in solvent systems. A cure time of up to a week may be required before use with wet laminating processes.

There is also a need for an adhesive composition that is not limited by adhesive layer thickness or combination of components to gain the desired adhesive strength, free of solvent, and/or environmentally friendly. No-solvent adhesive systems may be simpler and offer more flexibility, thereby improving economics in manufacturing of the finished packaging web.

It is also desirable to directly extrude an adhesive composition onto an impact-modified acrylonitrile-methylacrylate copolymer web in an extrusion coating process and to have good bonding without any surface treatment to the substrate although adhesion may be enhanced with surface treatment, such as corona treatment.

It is further desirable to have an adhesive composition that has good heat resistance provided allowing the composition to be extruded at higher temperatures or for processing with polymers at high temperatures.

Peelable heat seals can be designed to have three different failure modes when peeling seal to seal or seal to differentiated substrate. Failure can be interfacial, delamination or cohesive when peeling one from the other under stress at various angles of peel and speeds. Interfacial seals are designed to fail at the heat seal interface of the selected sealing surface (i.e. the sealant layer peels cleanly away from the substrate layer). In most cases seal strength is determined by temperature, pressure and dwell time. Seals that do not peel cleanly can contaminate the contents of the package with fragments of the seal or lidding. Interfacial peelable seals are desirable to prevent such contamination. Delamination heat seals are designed to fail at an internal interface of a multilayer film structure. This designed failure interface is in a chosen layer somewhere behind the actual heat seal layer in the film structure. Thickness and adhesion to the chosen internal layer interface may determine strength of the seal during peeling. In this case the entire sealant layer transfers to the substrate as the film structure is being peeled away. Cohesive seal failure by design fails within the actual sealant layer itself. When peeling the seal under stress and speed, the seal layer itself splits within and transfers a portion of the sealant material to the sealant substrate. Internal strength of the sealant material can be the determining factor for actual strength of the heat seal.

### SUMMARY OF THE INVENTION

The invention provides a composition comprising or produced from (a) 10 to 80 wt % of at least one ethylene copolymer; (b) 5 to 60 wt % of at least one polyolefin; (c) 0.5 to 35 wt % of at least one tackifying resin; and (d) 0 to 35 wt % of filler.

The composition can be used for adhesion of an impact-modified acrylonitrile-methylacrylate copolymer to substrate including foil, paper, polyesters, polyamides, polyolefins, polyethylene vinyl alcohol, polyethylene vinyl acetate, ethylene/(meth)acrylic acid copolymers and ionomers thereof, polyvinyl chloride, polyvinylidene chloride, anhydride-modified polyolefin.

This invention also provides a multilayer structure comprising at least one layer comprising the composition disclosed above, at least one layer comprising at least one impact-modified acrylonitrile-methylacrylate copolymer, and at least one optional layer comprising foil, paper, polyesters, polyamides, polyolefin, polyethylene vinyl alcohol, polyethylene vinyl acetate, ethylene/(meth)acrylic acid copolymer, ionomer of the acid copolymer, polyvinyl chloride, polyvinylidene chloride, anhydride-modified polyolefin, and combinations of two or more thereof. The multilayer structure includes a thermoformable web.

This invention also provides a package comprising the composition or the multilayer. The package can be in the form of a thermoformed blister pack or a container and can comprise the multilayer structure and at least one extra layer including or produced from foil, paperboard, high-density polyethylene (HDPE), polypropylene (PP), high-impact polystyrene (HIPS), amorphous polyethylene terephthalate (APET), crystalline polyethylene terephthalate (CPET), PVC, polyacrylonitrile homopolymer, polyacrylonitrile copolymer, polyacetal, polyacetal copolymer, or combinations of two or more thereof. A container can contain the extra layer and a peelable lid, which comprises or is produced from at least one layer comprising or produced from the composition disclosed above.

### DETAILED DESCRIPTION OF THE INVENTION

"Copolymer" means a polymer containing two or more different monomers. "Dipolymer" and "Terpolymer' mean polymers containing only two and three different monomers, respectively. "Copolymer of various monomers" means a copolymer whose units are derived from the various monomers.

"(Meth)acrylic acid" means methacrylic acid and/or acrylic acid. Likewise, the term "(meth)acrylate" means methacrylate and/or acrylate.

Thermoplastic compositions are polymeric materials that can flow when heated under pressure. Melt index (MI) is the mass rate of flow of a polymer through a specified capillary under controlled conditions of temperature and pressure. Melt indices reported herein are determined according to ASTM 1238 at 190°C using a 2.16 kg weight, with values of MI reported in grams/10 minutes. The thermoplastic compositions described herein are suitable for preparation of films and multilayer structures by extrusion processing.

"Foil" refers to a thin, flexible film or sheet of metal such as aluminum. It also refers to multilayer structures in which at least one layer of metal is adhered to additional layers of other materials.

The composition can also comprise or consist essentially of or be produced from (a) 15 to 80 weight % of at least one ethylene/alkyl (meth)acrylate copolymer, 5 to 45 weight % of at least one polyolefin, and 1 to 35 weight % of at least one tackifying resin; or alternatively (b) 15 to 70 weight % of at least one ethylene/alkyl (meth)acrylate copolymer, 15 to 45 weight % of at least one polyolefin, and 10 to 20 weight % of at least one tackifying resin; or alternatively (c) 40 to 70 weight % of at least one ethylene/alkyl (meth)acrylate copolymer, 15 to 45 weight % of at least one polyolefin, and 10 to 20 weight % of at least one tackifying resin; or alternatively (d) 10 to 80 weight % of at least one ethylene/alkyl (meth)acrylate copolymer, 5 to 60 weight % of at least one polyolefin, 0.5 to 35 weight % of at least one tackifying resin, and 0.5 to 35 weight %, alternatively 30 weight %, of filler; or alternatively (e) 40 to 60 weight % of at least one ethylene/alkyl (meth)acrylate copolymer, 20 to 40 weight % of at least one polyolefin, 10 to 20 weight % of at least one tackifying resin, and 5 to 20 weight % of filler.

### Ethylene/alkyl (meth)acylate copolymers

An ethylene copolymer comprises repeat units derived from ethylene, (meth)acrylic acid or (meth)acrylate or alkyl (meth)acrylate, and one or more optional comonomers such as CO, acid anhydride, maleic acid, monoester of the acid anhydride, an epoxy-containing (meth)acrylate, or combinations of two or more thereof. Ethylene/alkyl (meth)acrylate copolymers are examples, which are used interchangeably with "ethylene/(meth)acrylate copolymers" and denote a thermoplastic ethylene copolymer. The alkyl group can contain from 1 to 8 carbon atoms. Examples of alkyl (meth)acrylates include methyl acrylate, ethyl acrylate, butyl acrylate, methyl acrylate, ethyl acrylate, butyl acrylate, or combinations of two or more thereof. "Ethylene/methyl acrylate (EMA)" means a copolymer of ethylene (E) and methyl acrylate (MA). "Ethylene/ethyl acrylate (EEA)" means a copolymer of ethylene and ethyl acrylate (EA). "Ethylene/butyl acrylate (EBA)" means a copolymer of ethylene and butylacrylate (BA).

The amount of the alkyl acrylate comonomer incorporated into the ethylene/(meth)acrylate copolymer can vary from about 0.1 up to as high as 40 wt% of the total copolymer or even higher. The choice of the alkyl group can be one or more C₁-C₈ or C₁-C₄ alkyls. The alkyl (meth)acrylate comonomer has a concentration range of from about 5 to about 30 wt%, alternatively from 9 to 27 wt%, of the total ethylene/(meth)acrylate copolymer. For example, methyl acrylate can be present in a concentration range of from 5 to 30 wt%, alternatively from 9 to 25 wt%, or 9 to 24 wt%, of the ethylene/(meth)acrylate dipolymer.

A mixture of two or more ethylene/alkyl (meth)acrylate copolymers can be used. For example, useful properties may be obtained when two ethylene/alkyl acrylate copolymers are used in blends including those where the ethylene/alkyl acrylate component comprises two different ethylene/methyl acrylate copolymers. One may replace a single EMA grade in a blend with an equal amount of a properly selected mixture of two EMA grades, where the mixture has the same wt% methyl acrylate content and melt index as the single EMA grade replaced. By combining two different properly selected EMA copolymer grades, modification of the properties of the composition may be achieved as compared with compositions containing only a single EMA resin grade.

The ethylene/alkyl (meth)acrylate copolymers may also optionally include at least one additional comonomer selected from the group consisting of (meth)acrylic acid, maleic anhydride, glycidyl methacrylate and carbon monoxide to form terpolymers such as ethylene/isobutyl acrylate/methacrylic acid, ethylene/methyl acrylate/maleic anhydride, ethylene/butyl acrylate/glycidyl methacrylate (EBAGMA) and ethylene/butyl acrylate/carbon monoxide (EBACO).

Ethylene/(meth)acrylate copolymers can be prepared by processes well known in the polymer art using either autoclave or tubular reactors. The copolymerization can be run as a continuous process in an autoclave. For example, ethylene, an alkyl (meth)acrylate such as methyl acrylate, and optionally a solvent such as methanol (see US Patent 5,028,674) are fed continuously into a stirred autoclave of the type disclosed in US Patent 2,897,183, together with an initiator. The rate of addition may depend on polymerization temperature, pressure, and concentration of the methyl acrylate monomer in the reaction mixture needed to achieve the target composition of the copolymer. In some cases, it may be desirable to use a telogen such as propane, to control the molecular weight. The reaction mixture may be continuously removed from the autoclave. After the reaction mixture leaves the reaction vessel, the copolymer may be separated from the unreacted monomers and solvent (if solvent was used) by conventional means, e.g., vaporizing the nonpolymerized materials and solvent under reduced pressure and at an elevated temperature. Autoclave acrylate copolymers are available from Voridian under the name EMAC^{™}, from ExxonMobil under the name Optema^{™}, and from Atofina under the name of Lotryl^{™}.

Tubular reactor-produced ethylene/(meth)acrylate copolymer can be distinguished from the more conventional autoclave produced ethylene/(meth)acrylate as generally known in the art. Thus the term or phrase "tubular reactor produced" ethylene/(meth)acrylate copolymer denotes an ethylene copolymer produced at high pressure and elevated temperature in a tubular reactor or the like, wherein the inherent consequences of dissimilar reaction kinetics for the respective ethylene and alkyl (meth)acrylate (e.g. methyl acrylate) comonomers is alleviated or partially compensated by the intentional introduction of the monomers along the reaction flow path within the tubular reactor. Such a tubular reactor copolymerization technique can produce a copolymer having a greater relative degree of heterogeneity along the polymer backbone (a more blocky distribution of comonomers), tend to reduce the presence of long chain branching, and produce a copolymer characterized by a higher melting point than one produced at the same comonomer ratio in a high pressure stirred autoclave reactor.

Tubular reactor produced ethylene/(meth)acrylate copolymers of this nature are commercially available from E. I. du Pont de Nemours and Company, Wilmington, Delaware (DuPont).

The manufacturing of the tubular reactor ethylene/(meth)acrylate copolymers is well known to one skilled in the art such as disclosed in US Patents 3,350,372; 3,756,996; and 5,532,066. For additional discussion regarding the differences between tubular reactor produced and autoclave produced ethylene/alkyl acrylate copolymers, see Richard T. Chou, Mimi Y. Keating and Lester J. Hughes, "High Flexibility EMA made from High Pressure Tubular Process", Annual Technical Conference - Society of Plastics Engineers (2002), 60th(Vol. 2), 1832-1836.

Ethylene/alkyl acrylate copolymers are available from DuPont.

The ethylene/(meth)acrylate copolymers can vary in molecular weight. The specific selection of the melt index (MI) grade of polymer component(s) to be used may be influenced by the process used to create the multilayer structure. For example, ethylene/(meth)acrylate copolymers having Ml's from 0.1 to 100 g/10 min, 0.5 to 50 and most preferably from 0.50 to 30 g/10 min.

Preferred are compositions wherein said ethylene/(meth)acrylate copolymer of component is prepared in a tubular reactor.

### Polyolefins

Polyolefins can be selected from homopolymers and copolymers of olefins wherein the olefin monomers have from two to eight carbon atoms. Preferred are polyolefins selected from the group consisting of polyethylene homopolymers, polypropylene homopolymers, copolymers comprising ethylene, and copolymers comprising propylene. Polyethylenes (PE) useful for the compositions described herein can be prepared by a variety of methods, for example but not limitation, the well-known Ziegler-Natta catalyst polymerization (see for example U.S. Patent Number 4,076,698 and U.S. Patent Number 3,645,992), metallocene catalyst polymerization (see for example U.S. Patent Number 5,198,401 and U.S. Patent Number 5,405,922), Versipol® catalyst polymerization and by free radical polymerization. The polymerization can be conducted as solution phase processes, gas phase processes, and the like. Polyethylene polymers useful herein can include linear polyethylenes such as HDPE, linear low density polyethylene (LLDPE), very low or ultralow density polyethylenes (VLDPE or ULDPE) and branched polyethylenes such as low density polyethylene (LDPE). The densities of polyethylenes suitable for use in the present invention range from about 0.865 g/cc to about 0.970 g/cc. Linear polyethylenes for use herein can incorporate alpha-olefin comonomers such as butene, hexene or octene to decrease their density within the density range so described. The term "polyethylene" when used herein is used generically to refer to any or all of the polymers comprising ethylene described above.

A polyethylene of note is a copolymer of ethylene and 1-butene. Such a copolymer with 12.6 weight % 1-butene, having a melt index of 3.5 is available as Exact^{®} 3035 from ExxonMobil.

Another polyethylene of note is a copolymer of ethylene and 1-octene. Such a copolymer with 12 wt% octene, having a melt index of 3.5 is available as Engage^{®} 8450 from DuPont Dow Elastomers.

PP polymers include homopolymers, random copolymers, block copolymers and terpolymers of propylene including copolymers of propylene with other olefins such as ethylene, 1-butene, 2-butene and the various pentene isomers, etc., and of propylene with ethylene and one other olefin. Random copolymers, also known as statistical copolymers, are polymers in which the propylene and the comonomer(s) are randomly distributed throughout the polymeric chain in ratios corresponding to the feed ratio of the propylene to the comonomer(s). Block copolymers are made up of chain segments consisting of propylene homopolymer and of chain segments consisting of, for example, random copolymer of propylene and ethylene. PP generically refers to any or all of the polymers comprising propylene.

Homopolymers and random copolymers can be manufactured by any known process such as in the presence of catalyst systems known as Ziegler-Natta, based on organometallic compounds and on solids containing titanium trichloride.

Block copolymers can be manufactured similarly, except that propylene is generally first polymerized by itself in a first stage and propylene and additional comonomers such as ethylene are then polymerized, in a second stage, in the presence of the polymer obtained during the first. Each of these stages can be carried out, for example, in suspension in a hydrocarbon diluent, in suspension in liquid propylene, or else in gaseous phase, continuously or noncontinuously, in the same reactor or in separate reactors.

Additional information relating to block copolymers and to their manufacture may be found in "Block Copolymers" edited by D. C. Allport and W. H. Janes, Applied Science Publishers Ltd (1973).

The polyolefins can also be modified by the incorporation of low levels (e.g., less than about 3 weight %) of one or more polar monomers including, but not limitation, vinyl acetate, alkyl acrylates, carbon monoxide, glycidyl methacrylate, (meth)acrylic acid and maleic anhydride. The incorporation of these polar comonomers can be accomplished by copolymerization or by grafting.

Blends of two or more polyolefins can be used, e.g., LLDPE can be blended with either LDPE or HDPE to provide polyethylene blends suitable for use in this invention. Another suitable polyolefin blend is a blend of polypropylene and poly(1-butene) (PB).

### Tackifying Resins

Compositions of this invention contain tackifying resin (tackifier). Tackifier may be any tackifier known in the art such as those listed in U.S. Patent 3,484,405. Such tackifiers include a variety of natural and synthetic resins and rosin materials. The resins can be liquid, semi-solid to solid, complex amorphous materials generally in the form of mixtures of organic compounds having no definite melting point and no tendency to crystallize. Such resins are insoluble in water and can be of vegetable or animal origin, or can be synthetic resins. The resins can provide substantial and improved tackiness to the composition. Suitable tackifiers include, but are not limited to, the resins discussed below.

A class of resins can be the coumarone-indene resins, such as the para-coumarone-indene resins. The coumarone-indene resins can have a molecular weight that ranges from 500 to 5,000. Examples of resins of this type that are available commercially include those materials marketed as "Picco"-25 and "Picco"-100.

Another class of resins can be the terpene resins, including also styrenated terpenes. These terpene resins can have a molecular weight range from 600 to 6,000. Typical commercially available resins of this type are marketed as "Piccolyte" S-100, as "Staybelite Ester" #10, which is a glycerol ester of hydrogenated rosin, and as "Wingtack" 95, which is a polyterpene resin.

A third class of resins can be the butadiene-styrene resins having a molecular weight ranging from 500 to 5,000. A typical commercial product of this type is marketed as "Buton" 100, a liquid butadiene-styrene copolymer resin having a molecular weight of 2,500.

A fourth class of resins can be the polybutadiene resins having a molecular weight ranging from 500 to 5,000. A commercially available product of this type is that marketed as "Buton" 150, a liquid polybutadiene resin having a molecular weight of 2,000 to 2,500.

A fifth class of resins can be the so-called hydrocarbon resins produced by catalytic polymerization of selected fractions obtained in the refining of petroleum, and having a molecular weight range of 500 to 5,000. Examples of such resin are those marketed as "Piccopale"-100, and as "Amoco" and "Velsicol" resins. Similarly, polybutenes obtained from the polymerization of isobutylene may be included as a tackifier.

The tackifier may also include rosin materials, low molecular weight styrene hard resins such as the material marketed as "Piccolastic" A-75, disproportionated pentaerythritol esters, and copolymers of aromatic and aliphatic monomer systems of the type marketed as "Velsicol" WX-1232. The rosin that may be employed in the present invention may be gum, wood or tall oil rosin but preferably is tall oil rosin. Also the rosin material may be modified rosin such as dimerized rosin, hydrogenated rosin, disproportionated rosin, or esters of rosin. Esters can be prepared by esterifying the rosin with polyhydric alcohols containing from 2 to 6 alcohol groups.

The tackifying resin of note is one or more coumarone-indene resins, terpene resins, butadiene-styrene resins, hydrocarbon resins, and rosin materials.

A terpene resin-based tackifier of note is derived from poly-limonene, a monomer recovered from the citrus industry, available as Piccolyte^{®} C115 from (Pinova).

Another tackifier resin of note is Regalite R1125 available from Eastman.

A more comprehensive listing of tackifiers, which can be employed in this invention, is provided in the TAPPI CA Report #55, February 1975, pages 13-20, a publication of the Technical Association of the Pulp and Paper Industry, Atlanta, GA, which lists well over 200 tackifier resins that are commercially available.

The tackifier can also be a blend of two or more individual tackifiers.

The tackifier component may be either added directly to other components of the invention or pre-melt compounded into a masterbatch formulation. Such technology is disclosed in US Patent 6,255,395 and Japanese patent JP 2002 173,653. For example, poly-limonene may be blended with an ethylene/octane copolymer to prepare a tackifier masterbatch that can be added to the remaining components of the composition in a subsequent blending operation.

### Fillers

Addition of fillers can function as a way to increase the temperature resistance and affect peel seal characteristics of the composition.

Peelable heat seals commonly can be designed to have three different failure modes when peeling seal to seal or seal to differentiated substrate. Failure can be interfacial, delamination or cohesive when peeling one from the other under stress at various angles of peel and speeds. Interfacial seals are designed to fail at the heat seal interface of the selected sealing surface (i.e. the sealant layer peels cleanly away from the substrate layer). Seal strength can be determined by temperature, pressure and dwell time. Seals that do not peel cleanly can contaminate the contents of the package with fragments of the seal or lidding. Interfacial peelable seals are desirable to prevent such contamination. Delamination heat seals are designed to fail at an internal interface of a multilayer film structure. This designed failure interface is in a chosen layer somewhere behind the actual heat seal layer in the film structure. Thickness and adhesion to the chosen internal layer interface may determine strength of the seal during peeling. In this case the entire sealant layer transfers to the substrate as the film structure is being peeled away. Cohesive seal failure by design falls within the actual sealant layer itself. When peeling the seal under stress and speed, the seal layer itself splits within and transfers a portion of the sealant material to the sealant substrate. Internal strength of the sealant material is the determining factor for actual strength of the heat seal.

A filler can include particles of inorganic compounds, such as minerals and salts. Filler that can be included in the composition of the present invention on a weight basis can be a function of the density of the filler. Particle size and shape of the filler may have an effect on properties of blends. Fine particle size fillers generally have a tendency to result in higher blend viscosities and they are also more expensive. No. 9 Whiting (about 95% through 325 mesh) represents a viable midpoint in coarseness, availability, and cost. More preferred fillers are calcium carbonate and talc (essentially Mg₃Si₄O₁₀(OH)₃), and most preferred is talc. For example, filler can be present in the composition from 0 weight % to 35 weight %, or to 30 weight %.

Fillers may be pre-blended with an ethylene/alkyl acrylate or polyolefin in a masterbatch prior to blending into a composition of this invention. For example, talc may be blended with ethylene/methyl acrylate (20 weight % MA) copolymer to prepare a filler masterbatch that can be added to the remaining components of the composition in a subsequent blending operation.

Fillers may also be polymeric such as, for example, polystyrenic resins including homopolymers of styrene or alpha methylstyrene or copolymers of styrene with unsaturated monomers such as, but not limited to, ethylene, butene, butadiene, or isoprene. Specific examples include, but are not limited to ethylene/styrene random or block copolymers, ethylene/butadiene random or block copolymers, and hydrogenated and partially hydrogenated butadiene/styrene copolymers. Polystyrenics can be further modified for enhanced impact properties and usually referred to as High Impact Polystyrene or HIPS. Blends and mixtures of polystyrenics may be used. Specific examples include but are not limited to, HIPS from Nova Chemicals or ethylene/styrene copolymers sold by Dow Chemical.

Other additives can be present in the composition such as one or more antioxidants and thermal stabilizers, ultraviolet (UV) light stabilizers, colorants, pigments and dyes, fillers, delustrants, anti-slip agents, plasticizers, anti-block agents, compatibilizers, components for modifying surface characteristics such as Coefficient of Friction (COF), anti static and anti fog agents, other processing aids and the like. These additives may be present in the compositions used in this invention in quantities that are generally from 0.01 to 20 wt%, or from 0.1 to 15 wt%, of the composition (the percentages of such additives are not included in the total weight percentages of the composition in the Summary of the Invention). Many such additives may be present from 0.01 to 5 wt%.

The compositions can further comprise from about 0.01 to about 20 weight % of at least one additive selected from antioxidants, thermal stabilizers, ultraviolet light stabilizers, colorants, pigments, dyes, delustrants, anti-slip agents, plasticizers, anti-block agents, compatibilizers, components for modifying surface characteristics, anti static agents, antifog agents and other processing aids.

Antioxidants that may be present from 0.01 to 1 weight % are available under the trade name Irganox from Ciba Geigy Inc., Tarrytown, New York. For example, phenolic antioxidants such as Irganox E201 or Irganox 1010 or its derivatives may be added to the composition. Additives for modifying surface characteristics such as coefficient of friction, for anti-blocking or for chill roll release that may be present in amounts from 0.01 to 5 weight %. For example, such an additive is a dispersion of silicon dioxide (2 weight %) in an ethylene/ methacrylic acid copolymer used as carrier concentrate for blending into a resin (available from DuPont as Conpol^{®} 20B).

The optional incorporation of such conventional ingredients into the compositions can be carried out by any known process. This incorporation can be carried out, for example, by dry blending, by extruding a mixture of the various constituents, by the conventional masterbatch technique, or the like.

The adhesive composition may be produced by any means known to one skilled in the art such as mixing predetermined amounts of the ethylene/(meth)acrylate copolymer, the polyolefin, optionally the tackifier, and the optional filler by a mixer such as a Henschel mixer, a V blender, a ribbon blender or a tumbler blender; or after mixing, melt-kneading the mixture by a single screw extruder, a twin screw extruder, a kneader, a Banbury mixer, etc. and then pelletizing, melt extruding, granulating or pulverizing the mixture. The tackifier and/or filler, if desired, can be preblended with a portion of ethylene/(meth)acrylate copolymer or the polyolefin and then blended with the remaining components.

Upon proper melt blending or heat mixing, the composition can be extruded through a die via coextrusion. The thickness of the extruded sealant is preferably 1 to 400 microns, more preferably 5 to 100 microns, yet more preferably 10 to 30 microns.

Alternatively, the compositions can be extruded into a film having a thickness of 1 to 100 µm, 5 to 100 µm, or 10 to 75 µm and subsequently bonded, sealed or laminated to paper, foil, or film as part of a multilayer structure.

The adhesive resin composition can be used to bond various substrates or polymers to each other. For example, the articles are bonded or adhered by heat sealing, extrusion coating, extrusion laminating or coextrusion.

The final adhesive composition can be used directly, for example in a melt coextrusion, or be extruded in rope or pellet form or reduced to a chip or powder form for use in an appropriate applicator. It can be cast or extruded into a film or web form for subsequent use. In such shaped forms, it can be placed between the substances to be bonded and then activated by heat and pressure. The adhesives can be applied by any of the hot melt applicators commonly used by one skilled in the art.

The composition can be applied in any thickness one finds expedient, such as a layer thickness of from 0.0002 mils to 10 mils (0.5 x 10⁻⁶ cm to 0.0254 cm).

The invention further provides a seal or laminate that can be used for application to containers, packages, films and the like such as by heat sealing, which has a good heat sealing property and can be easily peeled.

Films and coatings can be made from the compositions as described herein and laminated or coated onto other films or structures. Alternatively, the composition can be simultaneously coextruded with other materials. To summarize, the adhesive resin compositions of the present invention have outstanding utility due to their unique chemical and physical properties as bonding agents and adhesives to provide so-called peel and seal adhesives and can be used in forms such as adhesive sheets, tapes, or laminated products.

The compositions described herein are useful in providing adhesion for bonding impact-modified acrylonitrile-methylacrylate copolymer-containing substrates to a second substrate including foil, paperboard, HDPE, PP, PVDC, HIPS, polyethylene terephthalate (PET) (APET or CPET), polystyrene (PS), PVC, polyacrylonitrile homopolymers and copolymers, polyacetal copolymer, polyacetal copolymer, or combinations of two or more thereof. The compositions disclosed herein provide wide levels of adhesive strength range and a broader, higher-temperature operating window over existing adhesive systems.

The invention provides a multilayer structure comprising at least one layer comprising the ethylene/alkyl (meth)acrylate-polyolefin-tackifier composition described above and at least one layer comprising impact-modified acrylonitrile-methylacrylate copolymers.

This invention also provides a multilayer structure comprising at least one layer comprising the ethylene/alkyl (meth)acrylate-polyolefin-tackifier composition described above, at least one layer comprising an impact-modified acrylonitrile-methylacrylate copolymer and at least one additional layer comprising a material selected from the group consisting of foil, paper, polyesters, polyamides, polyolefins, polyethylene vinyl alcohol, polyethylene vinyl acetate, ethylene/(meth)acrylic acid copolymers and ionomers thereof, polyvinyl chloride, polyvinylidene chloride and anhydride-modified polyolefins.

Structures comprising at least one layer comprising the ethylene/alkyl (meth)acrylate-polyolefin-tackifier composition described above and at least one layer comprising impact-modified acrylonitrile-methylacrylate copolymers can be prepared by extrusion coating or coextrusion.

In extrusion coating, a molten curtain of the ethylene/alkyl (meth)acrylate-polyolefin-tackifier composition is laid down on an impact-modified acrylonitrile-methylacrylate copolymer film substrate moving at high speeds (typically from 100 to 1000 or 300 to 800 feet per minute). The melt curtain is formed by extruding the adhesive composition through a flat die. The temperature of the composition as it leaves the die can be between 90 and 340°C or 270 and 330°C. The molten composition can be cooled as the film substrate comes into contact with a cold roll.

A multilayer structure can be prepared by coextrusion as follows: granulates of the various layer components are melted in extruders. The molten polymers are passed through a die or set of dies to form layers of molten polymers that are processed as a laminar flow. The molten polymers are cooled to form a layered structure. Molten extruded polymers can be converted into a film using a suitable converting technique such as blown film extrusion, cast film extrusion and cast sheet extrusion.

An example of a multilayer film prepared by either of these processes is a two-layer film consisting of a layer of impact-modified acrylonitrile-methylacrylate copolymer from 0.7 to 1.0 mil thick and a layer of a composition used in this invention from 0.2 to 1.0 mil thick. 1 mil = 0.00254 cm.

Multilayer structures of this invention can also be prepared by extrusion lamination. Typical processing conditions involved include, but are not limited to, laying down a molten curtain of the ethylene/alkyl (meth)acrylate-polyolefin-tackifier composition between the impact-modified acrylonitrile-methylacrylate copolymer film and a second substrate moving at high speeds (typically from 100 to 1000 or 300 to 800 feet per minute) as the films come into contact with a cold roll. The temperature of the ethylene/alkyl (meth)acrylate-polyolefin-tackifier composition as it leaves the die is preferably between 290 and 340°C or 270 and 330°C. The air gap between the die exit and cold roll is typically 3 to 15 inches or 5 to 10 inches. The time in the air gap (TIAG), defined as the air gap divided by the line speed, can be between 50 and 100 ms. See V. Antonov and A. Soutar, 1991 TAPPI PLC Conference Proceedings, p 553. The laminate can be cooled on a cold roll and hauled off at a line speed of between 100 and 1000 feet/minute or 300 and 800 feet/minute.

Films and/or substrates can be pre-treated or treatment can be applied in line to modify their surface characteristics and impact bonding strength. Treatments can include, but are not limited to, corona treatment, flame treatment under oxidizing or reducing conditions, using e.g. polyethylene imines (sold by MICA) or urethane (sold by Rohm & Haas).

The second substrate can be in the form of film or sheet and cab produced by any methods known to one skilled in the art such as those disclosed above including the various additives.

A multilayer film or sheet can include an outermost structural or abuse layer, an inner barrier layer, bulking layer and/or adhesive layer, and an innermost layer making contact with and compatible with the intended contents of the package and capable of forming the necessary seals (e.g. most preferably heat-sealable) to itself and the other parts of the package. Other layers may also be present to serve as adhesive or "tie" layers to help bond these layers together.

The outermost structural or abuse layer may be oriented polyester or oriented PVC, but can also include oriented polypropylene, oriented polyamide (nylon), or polyethylene such as high density polyethylene, or paper or foil. This layer, when optically transparent, may be reverse printable and unaffected by the sealing temperatures used to make the package, since the package is sealed through the entire thickness of the multilayer structure. When the outer structural or abuse layer is not optically transparent, this layer can be surface printed and then optionally coated with a protective coating or lacquer. The thickness of this layer may control the stiffness of the film, and may range from 10 µm to 100 µm or 12 µm to 50 µm.

The inner layer can include one or more bulking layers. This layer can be added to create a structure that has a final, predefined thickness by using a common polymer that is of low cost. Bulking layers can be, for example, polyolefins, polyolefin polar copolymers, polyester and or blends of various bulking layer components. A bulking layer can be used for incorporation of regrind and scrap generated in the manufacturing process. For example, scrap generated from material that is not suitable for sale, or material that is generated by trimming the edges off a semifinished roll, can be ground up and incorporated into the inner layer providing bulk at relatively low cost.

The inner layer can include one or more adhesive layers. This adhesive layer can adhere the outer structural layer to the inner layer, the inner layer to the innermost layer or, in the case where the inner layer may only be acting as an adhesive, bonding the outer layer directly to the innermost layer.

The structure and barrier layers can be combined to comprise several layers of polymers that provide barriers to moisture and oxygen and bulk mechanical properties suitable for processing and/or packaging the product, such as clarity, toughness and puncture-resistance. In some applications, the functions of structure and barrier layers may be combined in a single layer of a suitable resin. For example, nylon or PET are suitable for both structure and barrier functions.

Polyamides (nylon) suitable for use herein include aliphatic polyamides, amorphous polyamides, or a mixture thereof. Aliphatic polyamides can include polyamide 6, polyamide 6,66, blends and mixtures thereof such as commercially available Ultramid^{®} C4 and Ultramid^{®} C35 from BASF or Ube^{®}5033FXD27 from Ube Industries Ltd. or Capron^{®} from Honeywell International.

The film may further comprise other polyamides such as those described in US Patents 5,408,000; 4,174,358; 3,393,210; 2,512,606; 2,312,966 and 2,241,322.

Aromatic polyamides can include amorphous nylon resins 6-I/6-T commercially available as Selar^{®} PA from DuPont or Grivory^{®} G 21 from EMS-Chemie AG.

lonomers are copolymers of an olefin such as ethylene and an unsaturated carboxylic acid, such as acrylic acid or methacrylic acid and optionally softening monomers wherein at least one or more alkali metal, transition metal, or alkaline earth metal cations, such as sodium, potassium or zinc, are used to neutralize some portion of the acidic groups in the copolymer. For example, Ethylene/(meth)acrylic acid (E/(M)AA) is a copolymer of ethylene (E)/acrylic acid (AA) and/or ethylene/methacrylic acid (MAA), which is at least partially neutralized by one or more alkali metal, transition metal, or alkaline earth metal cations to form an ionomer. Terpolymers can also be made from an olefin such as ethylene, an unsaturated carboxylic acid and other comonomers such as alkyl (meth)acrylates to provide "softer" resins that can be neutralized to form softer ionomers. lonomers are well known. See, e.g., US 3,344,014.

Anhydride or acid-modified ethylene and propylene homo- and copolymers can be used as extrudable adhesive layers (also known as "tie" layers) to improve bonding of layers of polymers together when the polymers do not adhere well to each other, thus improving the layer-to-layer adhesion in a multilayer structure. Various tie layer compositions are commercially available such as Bynel^{®} from DuPont.

Polyethylene vinyl alcohol having from about 20 to about 50 mole % ethylene can be suitable for use herein. Suitable polyethylene vinyl alcohol copolymers are commercially available such as EVAL^{®} from Kuraray or Soarnol^{®} from Nippon Goshei.

Polyvinylidene chloride (PVDC) polymers and copolymers can be obtained commercially from Dow Chemical under the tradename Saran^{®}.

The manufacture of a film used as a second substrate described above can be carried out according to any known methods. For example, a primary film can be made by extruding the compositions using so-called "blown film" or "flat die" methods. A blown film can be prepared by extruding the polymeric composition through an annular die and expanding the resulting tubular film with an air current to provide a blown film. Cast flat films are prepared by extruding the composition through a flat die. The film leaving the die is cooled by at least one roll containing internally circulating fluid (a chill roll) or by a water bath to provide a cast film. The film can be sized by conventional techniques such as slitting to provide a packaging film and can have a width, e.g., of about 60 cm.

A film useful in the invention can be further oriented beyond the immediate quenching or casting of the film. The process comprises the steps of extruding a laminar flow of molten polymer, quenching the extrudate and orienting the quenched extrudate in at least one or more directions. Quenched describes an extrudate that has been substantially cooled below its melting point in order to obtain a solid film material.

The film can be unoriented, oriented in a uniaxial direction (e.g. machine direction), or oriented in a biaxial direction (e.g. machine direction and transverse direction).

The film is preferably biaxially oriented by drawing in two mutually perpendicular directions in the plane of the film to achieve a satisfactory combination of mechanical and physical properties.

Orientation and stretching apparatus to uniaxially or biaxially stretch film are well known in the art and the description thereof is omitted herein for the interest of brevity. See, e.g., US Patents 3,278,663; 3,337,665; 3,456,044; 4,590,106; 4,760,116; 4,769,421; 4,797,235 and 4,886,634.

The films used as substrates in this invention may be surface treated by means of corona discharge, ozone or other means standard in the industry.

The adhesion of the multilayer structure can be improved by increasing the thickness of the ethylene/alkyl (meth)acrylate-polyolefin heat seal layer. The thickness of the adhesive layer is preferably between 10 and 40 µ or 15 and 30 µ thick.

The multilayer structures can be useful in packaging applications as packaging materials such as packaging films, which can be formed into pouches, or as industrial films such as masking films whereby a film is thermally laminated to a substrate, such as foil or polyester or acrylic, and peeled off when surface protection is no longer desired. Of particular note are multilayer structures that are used as a thermoformable web.

The packaging materials may also be processed further by, for example but not limitation, printing, embossing, and/or coloring to provide a packaging material to provide information to the consumer about the product therein and/or to provide a pleasing appearance of the package.

Specific multilayer structures of this invention are listed below in which the adhesive tie layer is prepared from an ethylene/alkyl (meth)acrylate-polyolefin composition used in this invention, wherein "tie" refers to an extrudable adhesive or tie layer as described above and wherein "adh" refers to an adhesive system.

Multilayer film structures of this invention include extrusion-laminated films having the structures indicated:
PVC/tie/impact-modified acrylonitrile-methylacrylate copolymers;
PET/tie/impact-modified acrylonitrile-methylacrylate copolymers; or
Nylon/adh/PET/tie/impact-modified acrylonitrile-methylacrylate copolymers.

The multilayer structures may be incorporated into packages, such as blister packs, by standard methods well known in the art.

The packages may contain from one to a multiplicity of articles, such as food; beverages; candy; medicaments in the form of capsules, tablets, lozenges, pills and/or the like; transdermal patches; medical instruments such as syringes and catheters; personal care products such as nail enamel, mouthwash, bath gel; or nonmedicaments, such as fuel additives, agrochemical products, air fresheners, poisons, catalysts, cleaning compositions, batteries, and other goods that need to be protected from oxygen and moisture. Packages may also include biohazard containers, criminal evidence bags and the like in which a user places materials to prevent contamination.

Laminations can be used for producing a formable web for blister packaging. For example, an impact-modified acrylonitrile-methylacrylate copolymer layer is adhered to a layer of PVC or polyester with a composition used to create the forming structure to provide sufficient oxygen and moisture barrier for use as inside layer for blister packaging. The impact-modified acrylonitrile-methylacrylate copolymer can be the innermost layer and sealing substrate for the heat sealable top web, allowing the final package to realize the full barrier properties of the impact-modified acrylonitrile-methylacrylate copolymers, leading to longer shelf life.

The multilayer structures also may be incorporated into packages such as lidded containers by methods well known in the art. Packages or containers include rigid thermoformed containers comprising a structure comprising an impact-modified acrylonitrile-methylacrylate copolymer; and a peelable lid comprising a multilayer structure comprising at least one layer comprising the ethylene/alkyl (meth)acrylate-polyolefin compositions described above and at least one additional layer comprising at least one layer selected from the group consisting of foil, paperboard, HDPE, PP, HIPS, APET, CPET, PVC, polyacrylonitrile homopolymers and copolymers, polyacetal and polyacetal copolymers.

Alternatively, packages or containers include molded, pressed or thermoformed containers comprising a structure comprising at least one layer selected from the group consisting of foil, paperboard, glass, HDPE, PP, HIPS, expanded polystyrene (EPS), acrylic homopolymers and acrylic copolymers, polycarbonate, polysulfone, APET, CPET, PVC, polychlorotrifluoroethylene, polyacrylonitrile homopolymers and copolymers, polyacetal and polyacetal copolymers with a peelable lid comprising the ethylene/alkyl (meth)acrylate-polyolefin compositions and at least one additional layer comprising an impact-modified acrylonitrile-methylacrylate copolymer. In addition to the materials listed above, the rigid containers may contain other materials. For example, a polymeric resin may be modified by various additives to provide a modified polymeric blend suitable for preparing containers, such as toughened CPET. The materials can also be modified with other additives such as denesting agents and can also be modified with additives such as fillers. The containers can be multilayer containers containing an innermost product contact layer, an inner layer that can be a barrier or bulking layer and an outer or abuse layer.

Such containers may be used to package products such as yogurts, puddings, custards, gelatins, fruit sauces (for example, applesauce) and the like. They may also be used to package cheese spreads and dips.

Packages may also comprise flexible films, such as pouches. Pouches are typically made from overlying sheets of flexible film, permanently sealed around the pouch's peripheral edges. Packages of this invention in the form of pouches include packages for dry foods such as noodles and seasoning for reconstitution with water. They can also be used to package dry snacks such as cookies, chips and the like.

Packages as described herein may also be used as packages for meats and frozen or refrigerated meals.

Containers in the form of bottles may be used to package beverages such as fruit juices.

The following Examples are merely illustrative, and are not to be construed as limiting the scope of the invention.

### EXAMPLES

Compositions were prepared from the materials listed below using standard blending techniques to provide Examples 1 through 12, compositions of this invention, summarized in Tables 1 through 3 below.

### Materials Used

EMA-7: An ethylene/methyl acrylate (9 weight %) copolymer with MI of 6 available from DuPont.
EMA-8: An ethylene/ methyl acrylate (20 weight %) copolymer with MI of 8 available from DuPont.
EMA-9: An ethylene/ methyl acrylate (13 weight %) copolymer with MI of 9 available from DuPont.
PE-1: A copolymer of ethylene and 1-butene with MI of 3.5 (available as Exact^{®} 3035 from ExxonMobil).
PE-2: A copolymer of ethylene and 1-octene (12 weight % octane) with MI of 3.5 (available as Engage^{®} 8450 from DuPont Dow Elastomers).
PE-3: A low-density polyethylene available from DuPont.
Add-1: 2 weight % of silicon dioxide dispersion in an ethylene/ methacrylic acid copolymer (available from DuPont as Conpol^{®} 20S2).
Tack-1: A tackifier resin derived from poly-limonene available as Piccolyte^{®} C115 from Pinova.
Tack-2: A tackifier resin available as Regalite R1125 from Eastman.
Filler-1: A masterbatch pre-blend of 50 weight % of talc and 50 weight % of EMA-8. When Filler-1 is reported present in a composition, the actual amount of filler (i.e. talc) present is half of the weight % reported. Further, when Filler-1 is reported present in a composition, half of the weight % reported is an amount of an ethylene/alkyl acrylate that is in addition to the amount of any other ethylene/alkyl acrylate in the composition.
Filler-2: High Impact Polystyrene (available as FX510 from Nova Chemical Company).
Antiox-1: Antioxidant Irganox^{®} 1010.

The compositions are summarized in Tables 1 to 3 with amounts listed as parts by weight where -" means a component is not present.

**Table 1**

| Ex. | EMA copolymer | | PE-1 | Tack-1 | Add-1 | Antiox-1 |
|---|---|---|---|---|---|---|
| 1 | EMA-7 | 52.95 | 30 | 15 | 2 | 0.05 |
| 2 | EMA-7 | 62.95 | 20 | 15 | 2 | 0.05 |
| 3 | EMA-7 | 42.95 | 40 | 15 | 2 | 0.05 |
| 4 | EMA-9 | 52.95 | 30 | 15 | 2 | 0.05 |

**Table 2**

| Ex. | EMA copolymer | | PE-2 | Tack-1 | Add-1 | Filler-1 | Antiox-1 |
|---|---|---|---|---|---|---|---|
| 6 | EMA-7 | 50.95 | 27.5 | 15 | 1.5 | 5 | 0.05 |
| 7 | EMA-7 | 45.45 | 23 | 15 | 1.5 | 15 | 0.05 |
| 8 | EMA-7 | 42.95 | 20.5 | 15 | 1.5 | 20 | 0.05 |
| 9 | EMA-7 | 40.45 | 18 | 15 | 1.5 | 25 | 0.05 |
| 10 | EMA-7 | 52.95 | 30 | 15 | 2 | - - | 0.05 |
| 11 | EMA-7 | 52.95 | 26.25 | 18.75 | 2 | - - | 0.05 |

**Table 3**

| Ex. | EMA copolymer | | PE-1 | Tack-1 | Add-1 | Filler-1 | Antiox-1 |
|---|---|---|---|---|---|---|---|
| 12 | EMA-9 | 47.95 | 25 | 15 | 2 | 10 | 0.05 |

Compositions were prepared by blending the materials listed in Tables 4 and 5 using standard blending techniques to provide Examples 13 through 17, compositions of this invention. A pre-blend of 80 weight % of Tack-1 and 20 weight % of PE-2 was used in these compositions (the amounts reported for those components in Tables 4 and 5 were the total amounts after incorporation of the pre-blend).

**Table 4**

| Ex. | EMA copolymer | | PE-2 | Tack-1 | PE-3 | Filler-1 | Antiox-1 |
|---|---|---|---|---|---|---|---|
| 13 | EMA-7 | 24.95 | 13 | 12 | 25 | 25 | 0.05 |
| 14 | EMA-7 | 14.95 | 18 | 12 | 25 | 30 | 0.05 |
| 15 | EMA-7 | 14.95 | 13 | 12 | 30 | 30 | 0.05 |

**Table 5**

| Ex. | EMA copolymer | | PE-2 | Tack-1 | PE-3 | Filler-2 | Antiox-1 |
|---|---|---|---|---|---|---|---|
| 16 | EMA-7 | 34.95 | 18 | 12 | 25 | 10 | 0.05 |
| 17 | EMA-7 | 34.95 | 13 | 12 | 25 | 15 | 0.05 |

### Example 18

A monolayer film comprising the composition of Example 10 was sealed to film comprising an impact-modified acrylonitrile-methylacrylate copolymer (available as Barex 210) using a Sentinel sealer at 40 psi (1 psi = 0.275 mPa) with a dwell time of one second, at the temperatures indicated in Table 6.

Peel Strength: Seal layers were sealed to substrates using standard sealing equipment and conditions described above to provide one-inch wide sealed strips. The layers were separated at the seal layer/substrate interface unless otherwise noted and pulled in a tensile tester at room temperature in a "T-peel" configuration at a separation speed of 12 inches/minute (about 30 cm/min). The average force to separate the layers divided by the width was the peel strength (g/inch) (1 g/inch = 0.0934 g/cm). Typically, from three to ten separate determinations were averaged together and reported.

Table 6 provides peel data (g/inch, room temperature, 50 % relative humidity, five repetitions and average) for the Example 18 film structures.

**Table 6**

| Temperature | Seal strength, g/inch | | | | | |
|---|---|---|---|---|---|---|
| | 1 | 2 | 3 | 4 | 5 | Average |
| 300°F | 900 | 1150 | 1300 | 1150 | 1350 | 1170 |
| 325°F | 1400 | 1500 | 1850 | 1600 | 1400 | 1550 |
| 350°F | 1200 | 1300 | 1300 | 1100 | 1100 | 1200 |

Inspection of the results reported in Table 6 shows that a composition as described herein provides excellent adhesion (i.e. seal strength) to an impact modified acrylonitrile-methylacrylate copolymer.

### Example 19

A multilayer structure comprising the composition of Example 10 as an adhesive layer is prepared by extrusion lamination on an Egan lamination machine. The Example 10 composition is fed into an extruder with the following temperature profile (°F) through a flat die:
feed zone: 350, zone 2: 470, zone 3: 490, metering zone: 490, adapter: 490, die: 490.

The resulting melt curtain is laid down between a 9 mil PVC primary substrate and a 0.9 mil impact-modified acrylonitrile-methylacrylate secondary film substrate at a line speed of 300 feet per minute and nipped between a matte finishing roll and a Teflon^{®} pressure roll. The substrates have no surface treatment.

### Example 20

A two-layer structure comprising the composition of Example 10 as an adhesive coating layer on a 0.9 mil impact-modified acrylonitrile-methylacrylate film substrate is prepared by extrusion coating on an Egan lamination machine using processing conditions similar to Example 19.

### Example 21

A 9 mil PVC/0.02 to 0.05mil tie/0.9 mil impact-modified acrylonitrile-methylacrylate copolymer three-layer structure comprising the composition of Example 10 as an adhesive tie layer is prepared by extrusion lamination on a lamination machine using processing conditions similar to Example 20.

### Example 22

A 9 mil PET/0.02 to 0.05mil tie/0.9 mil impact-modified acrylonitrile-methylacrylate three-layer structure comprising the composition of Example 10 as an adhesive tie layer is prepared by extrusion lamination on a lamination machine using processing conditions similar to Example 19.

### Example 23

A four-layer structure comprising the composition of Example 10 as an adhesive heat seal coating layer on a 9 mil PVC/0.02 to 0.05mil tie/0.9 mil impact-modified acrylonitrile-methylacrylate substrate is prepared by extrusion coating the acrylonitrile-methylacrylate surface of the Example 9 three-layer laminate on a lamination machine using processing conditions similar to Example 19. Alternatively, the four-layer structure could be prepared in a single pass through a lamination machine with tandem capability (i.e. a machine with a second lamination assembly) by laying down a melt curtain of the Example 10 composition between the PVC and impact-modified acrylonitrile-methylacrylate substrate in the first lamination assembly and then extrusion coating the acrylonitrile-methylacrylate surface with the Example 10 composition in the second lamination assembly.

### Example 24

A four-layer structure comprising the composition of Example 10 as an adhesive heat seal coating layer on a 9 mil PET/0.02 to 0.05mil tie/0.9 mil impact-modified acrylonitrile-methylacrylate substrate is prepared by extrusion coating the acrylonitrile-methylacrylate surface of the Example 10 three-layer laminate on a lamination machine using processing conditions similar to Example 19. Alternatively, the four-layer structure could be prepared in a single pass through a lamination machine with tandem capability (i.e. a machine with a second lamination assembly) by laying down a melt curtain of the Example 10 composition between the PET and the acrylonitrile-methylacrylate substrate in the first lamination assembly and then extrusion coating the acrylonitrile-methylacrylate surface with the Example 10 composition in the second lamination assembly.

### Example 25

A four-layer structure comprising the composition of Example 10 as an adhesive tie layer and heat seal layer is prepared by coextrusion through a laminar die, providing a 9 mil PVC/0.02 to 0.05mil tie/0.9 mil acrylonitrile-methylacrylate/0.02 to 0.05 mil sealant structure.

### Example 26

A four-layer structure comprising the composition of Example 10 as an adhesive tie layer and heat seal layer is prepared by coextrusion through a laminar die, providing a 9 mil PET/0.02 to 0.05mil tie/ 0.9 mil acrylonitrile-methylacrylate/0.02 to 0.05mil sealant structure.

### Example 27

The multilayer structure of Example 21 film is thermoformed into blister pack blanks using a Medipak Model CP-2I packaging machine (upper and lower forming temperatures 115°C).

## Claims

1. An article comprising a substrate, a composition, and an acrylonitrile composition wherein
the substrate comprises foil, paper, paperboard, polyester, polyamide, polyolefin, polyethylene vinyl alcohol, polyethylene vinyl acetate, ethylene acid copolymer, ionomer of the ethylene acid copolymer, polyvinyl chloride, polyvinylidene chloride, and anhydride-modified polyolefin, polyacetal, polyacetal copolymer, or combinations of two or more thereof;
the composition comprises, or is produced from, (a) 10 to 80, 15 to 80, or 15 to 70, wt % of at least one ethylene copolymer and preferably 40 to 70 wt% of the ethylene copolymer, (b) 5 to 60, 5 to 45, 15 to 45, wt % of at least one polyolefin, (c) 0.5 to 35, 1 to 35, 10 to 20, wt % of at least one tackifying resin, and (d) 0 to 35 wt % of filler;
the ethylene copolymer comprises repeat units derived from ethylene and alkyl (meth)acrylate, (meth)acrylic acid, an optional comonomer, or combinations of two or more thereof and the ethylene copolymer preferably comprises repeat units derived from ethylene and one or more C₁₋₈ alkyl (meth)acrylate;
the polyolefin preferably includes polyethylene homopolymer, polypropylene homopolymer, copolymer comprising ethylene, copolymer comprising propylene, or combinations of two or more thereof and more preferably includes a copolymer of ethylene and 1-butene, a copolymer of ethylene and 1-octene, or combinations thereof;
the optional comonomer includes maleic anhydride, monoester of maleic anhydride, glycidyl methacrylate, glycidyl acrylate, carbon monoxide, or combinations of two or more thereof; and
the acrylonitrile composition comprises a polymer derived from acrylonitrile and methylacrylate.

2. The article of claim 1 wherein the composition comprises (a) 40 to 60 wt % of the ethylene copolymer; (b) 20 to 40 wt % of the polyolefin; (c) 10 to 20 wt % of the tackifying resin; and (d) 5 to 20 wt % of the filler.

3. The article of claim 1 or 2 wherein the ethylene comonomer comprises 5 to 30 or 9 to 24 wt % repeat units derived from alkyl (meth)acrylate, preferably methyl acrylate.

4. The article of claim 1, 2, or 3 wherein the ethylene copolymer has a melt index 0.1 to 100 g/10, 0.5 to 50 g/10, or 0.5 to 30 g/10, minutes.

5. The article of claim 1, 2, 3, or 4 wherein the composition comprises two different ethylene copolymers.

6. The article of claim 1, 2, 3, 4, or 5 wherein the composition comprises repeat units derived from the optional comonomer.

7. The article of claim 1, 2, 3, 4, 5, or 6 wherein the tackifying resin includes coumarone-indene resin, terpene resin, butadiene-styrene resin, hydrocarbon resin, rosin material, or combinations of two or more thereof and preferably is derived from poly-limonene.

8. The article of claim 1, 2, 3, 4, 5, 6, or 7 wherein the ethylene copolymer is a tubular reactor-produced ethylene copolymer.

9. A multilayer structure comprising or produced from at least one layer comprising a composition, at least one layer comprising at least one impact-modified acrylonitrile-methylacrylate copolymer, and optionally at least one additional layer wherein the composition is as recited in claim 1, 2, 3, 4, 5, 6, 7, or 8; the additional layer comprises or is produced from foil, paper, polyester, polyamides, polyolefin, polyethylene vinyl alcohol, polyethylene vinyl acetate, ethylene acid copolymer, ionomer of the ethylene acid copolymer, polyvinyl chloride, polyvinylidene chloride, anhydride-modified polyolefin, or combinations of two or more thereof; the additional layer preferably comprises or is produced from polyvinyl chloride, polyester, or combinations thereof; and the additional layer more preferably comprises or is produced from polyethylene terephthalate.

10. The multilayer structure of claim 9 being a thermoformable web.

11. A package comprising at least one layer comprising or produced from a composition; at least one layer comprising an impact-modified acrylonitrile-methylacrylate copolymer; and at least one additional layer comprising foil, paperboard, high-density polyethylene, polypropylene, high-impact polystyrene, amorphous polyethylene terephthalate, crystalline polyethylene terephthalate, polyvinyl chloride, polyacrylonitrile homopolymer, polyacrylonitrile copolymer, polyacetal, polyacetal copolymer, or combinations of two or more thereof wherein the package includes thermoformed blister pack, pouch, rigid container, or combinations of two or more thereof; the composition is as recited in claim 1, 2, 3, 4, 5, 6, 7, or 8; and the additional layer preferably comprises polyvinyl chloride, polyester, or combinations thereof.

12. The package of claim 11 comprising (1) a container comprising an impact-modified acrylonitrile-methylacrylate copolymer and (2) a peelable lid wherein the lid comprises or produced from a multilayer structure comprising at least one layer comprising the composition and the additional layer.

## Patentansprüche

1. Artikel, der ein Substrat, eine Zusammensetzung und eine Acrylnitril-Zusammensetzung aufweist, wobei
das Substrat Folie, Papier, Pappe, Polyester, Polyamid, Polyolefin, Polyethylenvinylalkohol, Polyethylenvinylacetat, Ethylen-Säure-Copolymer, ein Ionomer des Ethylen-Säure-Copolymers, Polyvinylchlorid, Polyvinylidenchlorid und mit Anhydrid modifiziertes Polyolefin, Polyacetal, Polyacetal-Copolymer oder Kombinationen von zwei oder mehreren dieser Verbindungen aufweist;
die Zusammensetzung (a) 10 bis 80, 15 bis 80 oder 15 bis 70 Gew.-% mindestens eines Ethylen-Copolymers und vorzugsweise 40 bis 70 Gew.-% des Ethylen-Copolymers, (b) 5 bis 60, 5 bis 45, 15 bis 45 Gew.-% mindestens eines Polyolefins, (c) 0,5 bis 35, 1 bis 35, 10 bis 20 Gew.-% mindestens eines klebrigmachenden Harzes und (d) 0 bis 35 Gew.-% Füllstoff aufweist oder daraus hergestellt ist;
das Ethylen-Copolymer Struktureinheiten aufweist, die von Ethylen und Alkyl(meth)acrylat, (Meth)Acrylsäure, einem wahlfreien Comonomer oder Kombinationen von zwei oder mehreren dieser Verbindungen abgeleitet sind, und wobei das Ethylen-Copolymer vorzugsweise Struktureinheiten aufweist, die von Ethylen und einem oder mehreren C₁₋₈-Alkyl(meth)acrylat(en) abgeleitet sind;
das Polyolefin vorzugsweise Polyethylen-Homopolymer, Polypropylen-Homopolymer, Copolymer mit Ethylen, Copolymer mit Propylen oder Kombinationen von einer oder mehreren dieser Verbindungen aufweist und stärker bevorzugt ein Copolymer von Ethylen und 1-Buten, ein Copolymer von Ethylen und 1-Octen oder Kombinationen davon aufweist;
das wahlfreie Comonomer Maleinsäureanhydrid, Monoester von Maleinsäureanhydrid, Glycidylmethacrylat, Glycidylacrylat, Kohlenmonoxid oder Kombinationen von zwei oder mehreren dieser Verbindungen aufweist; und
die Acrylnitrilzusammensetzung ein Polymer aufweist, das von Acrylnitril und Methacrylat abgeleitet ist.

2. Artikel nach Anspruch 1, wobei die Zusammensetzung aufweist: (a) 40 bis 60 Gew.-% des Ethylen-Copolymers; (b) 20 bis 40 Gew.-% des Polyolefins; (c) 10 bis 20 Gew.-% des klebrigmachenden Harzes und (d) 5 bis 20 Gew.-% des Füllstoffs.

3. Artikel nach Anspruch 1 oder 2, wobei das Ethylen-Copolymer 5 bis 30 oder 9 bis 24 Gew.-% Struktureinheiten aufweist, die von Alkyl(meth)acrylat, vorzugsweise Methylacrylat, abgeleitet sind.

4. Artikel nach Anspruch 1, 2 oder 3, wobei das Ethylen-Copolymer einen Schmelzindex von 0,1 bis 100 g/10 Minuten, 0,5 bis 50 g/10 Minuten oder 0,5 bis 30 g/10 Minuten aufweist.

5. Artikel nach Anspruch 1, 2, 3 oder 4, wobei die Zusammensetzung zwei verschiedene EthylenCopolymere aufweist.

6. Artikel nach Anspruch 1, 2, 3, 4 oder 5, wobei die Zusammensetzung Struktureinheiten aufweist, die von dem wahlfreien Comonomer abgeleitet sind.

7. Artikel nach Anspruch 1, 2, 3, 4, 5 oder 6, wobei das klebrigmachende Harz Cumaron-Inden-Harz, Terpenharz, Butadien-Styrol-Harz, Kohlenwasserstoffharz, Kolophonium-Material oder Kombinationen von zwei oder mehreren dieser Harze aufweist und vorzugsweise von Polylimonen abgeleitet ist.

8. Artikel nach Anspruch 1, 2, 3, 4, 5, 6 oder 7, wobei das Ethylen-Copolymer ein in einem Rohrreaktor erzeugtes Ethylen-Copolymer ist.

9. Mehrschichtige Struktur, die mindestens eine Schicht, die eine Zusammensetzung aufweist, mindestens eine Schicht, die mindestens ein schlagzähgemachtes Acrylnitril-Methacrylat-Copolymer aufweist, und wahlweise mindestens eine zusätzliche Schicht mit einer Zusammensetzung nach Anspruch 1, 2, 3, 4, 5, 6, 7 oder 8 aufweist oder daraus hergestellt ist; wobei die zusätzliche Schicht Folie, Papier, Polyester, Polyamide, Polyolefin, Polyethylenvinylalkohol, Polyethylenvinylacetat, Ethylen-Säure-Copolymer, ein Ionomer des Ethylen-Säure-Copolymers, Polyvinylchlorid, Polyvinylidenchlorid, ein mit Anhydrid modifiziertes Polyolefin oder Kombinationen von zwei oder mehreren dieser Verbindungen aufweist oder daraus hergestellt ist; wobei die zusätzliche Schicht vorzugsweise Polyvinylchlorid, Polyester oder Kombinationen davon aufweist oder daraus hergestellt ist; und wobei die zusätzliche Schicht stärker bevorzugt Polyethylenterephthalat aufweist oder daraus hergestellt ist.

10. Mehrschichtige Struktur nach Anspruch 9, die eine thermoformbare Stoffbahn ist.

11. Verpackungsmaterial, das aufweist: mindestens eine Schicht, die eine Zusammensetzung aufweist oder daraus hergestellt ist, mindestens eine Schicht, die ein schlagzähgemachtes Acrylnitril-Methacrylat-Copolymer aufweist; und mindestens eine zusätzliche Schicht, die Folie, Pappe, Polyethylen hoher Dichte, Polypropylen, hochschlagfestes Polystyrol, amorphes Polyethylenterephthalat, kristallines Polyethylenterephthalat, Polyvinylchlorid, Polyacrylnitril-Homopolymer, Polyacrylnitril-Copolymer, Polyacetal, Polyacetal-Copolymer oder Kombinationen von zwei oder mehreren dieser Verbindungen, wobei das Verpackungsmaterial eine thermogeformte Klarsichtpackung, einen Beutel, einen starren Behälter oder Kombinationen von zwei oder mehreren davon einschließt, wobei die Zusammensetzung Anspruch 1, 2, 3, 4, 5, 6, 7 oder 8 entspricht; und wobei die zusätzliche Schicht vorzugsweise Polyvinylchlorid, Polyester oder Kombinationen davon aufweist.

12. Verpackungsmaterial nach Anspruch 11, das aufweist: (1) einen Behälter mit einem schlagzähgemachten Acrylnitril-Methacrylat-Copolymer und (2) einen abziehbaren Deckel, wobei der Deckel eine mehrschichtige Struktur aufweist oder daraus hergestellt ist, die mindestens eine Schicht mit der Zusammensetzung und die zusätzliche Schicht aufweist.

## Revendications

1. Article comprenant un substrat, une composition et une composition d'acrylonitrile, dans lequel :
le substrat comprend une feuille, un papier, un carton, un polyester, un polyamide, une polyoléfine, un polyéthylène-alcool de vinyle, un polyéthylène-acétate de vinyle, un copolymère d'éthylène et d'acide, un ionomère du copolymère d'éthylène et d'acide, un poly(chlorure de vinyle), un poly(chlorure de vinylidène) et une polyoléfine à modification anhydride, un polyacétal, un copolymère de polyacétal ou des combinaisons de deux de ces éléments ou plus ;
la composition comprend, ou est produite en utilisant, (a) 10 à 80, 15 à 80 ou 15 à 70% en poids d'au moins un copolymère d'éthylène et, de préférence, 40 à 70% en poids du copolymère d'éthylène, (b) 5 à 60, 5 à 45, 15 à 45% en poids d'au moins une polyoléfine, (c) 0,5 à 35, 1 à 35, 10 à 20% en poids d'au moins une résine adhésivante et (d) 0 à 35% en poids d'une charge ;
le copolymère d'éthylène comprend des unités répétées dérivées d'éthylène et de (méth)acrylate d'alkyle, d'acide (méth)acrylique, un comonomère facultatif ou des combinaisons de deux d'entre eux ou plus, et le copolymère d'éthylène comprend, de préférence, des unités répétées dérivées d'éthylène et d'un ou de plusieurs (méth)acrylates d'alkyle en C_{1-C8} ;
la polyoléfine comprend, de préférence, un homopolymère de polyéthylène, un homopolymère de polypropylène, un copolymère comprenant de l'éthylène, un copolymère comprenant du propylène ou des combinaisons de deux d'entre eux ou plus et, mieux encore, elle comprend un copolymère d'éthylène et de 1-butène, un copolymère d'éthylène et de 1-octène, ou des combinaisons de ceux-ci ;
le comonomère facultatif comprend de l'anhydride maléique, un monoester d'anhydride maléique, du méthacrylate de glycidyle, de l'acrylate de glycidyle, du monoxyde de carbone ou des combinaisons de deux d'entre eux ou plus ; et
la composition d'acrylonitrile comprend un polymère dérivé de l'acrylonitrile et de l'acrylate de méthyle.

2. Article selon la revendication 1, dans lequel la composition comprend (a) 40 à 60% en poids du copolymère d'éthylène ; (b) 20 à 40% en poids de la polyoléfine ; (c) 10 à 20% en poids de la résine adhésivante ; et (d) 5 à 20% en poids de la charge.

3. Article selon la revendication 1 ou 2, dans lequel le comonomère d'éthylène comprend 5 à 30 ou 9 à 24% en poids d'unités répétées dérivées d'un (méth)acrylate d'alkyle, de préférence, d'acrylate de méthyle.

4. Article selon la revendication 1, 2 ou 3, dans lequel le copolymère d'éthylène a un indice de fusion de 0,1 à 100 g/10, de 0,5 à 50 g/10 ou de 0,5 à 30 g/10 minutes.

5. Article selon la revendication 1, 2, 3 ou 4, dans lequel la composition comprend deux copolymères d'éthylène différents.

6. Article selon la revendication 1, 2, 3, 4 ou 5, dans lequel la composition comprend des unités répétées dérivées du comonomère facultatif.

7. Article selon la revendication 1, 2, 3, 4, 5 ou 6, dans lequel la résine adhésivante comprend une résine de coumarone-indène, une résine de terpène, une résine de butadiène-styrène, une résine hydrocarbonée, un matériau de colophane ou des combinaisons de deux d'entre elles ou plus et, de préférence, la résine est dérivée du poly-limonène.

8. Article selon la revendication 1, 2, 3, 4, 5, 6 ou 7, dans lequel le copolymère d'éthylène est un copolymère d'éthylène produit dans un réacteur tubulaire.

9. Structure multicouche comprenant ou produite en utilisant au moins une couche comprenant une composition, au moins une couche comprenant au moins un copolymère d'acrylonitrile-acrylate de méthyle modifié en résistance aux chocs et, éventuellement, au moins une couche supplémentaire, dans laquelle la composition est telle que celle énoncée dans la revendication 1, 2, 3, 4, 5, 6, 7 ou 8 ; la couche supplémentaire comprenant ou étant produite en utilisant une feuille, du papier, un polyester, des polyamides, une polyoléfine, un polyéthylène-alcool de vinyle, un polyéthylène-acétate de vinyle, un copolymère d'éthylène et d'acide, un ionomère du copolymère d'éthylène et d'acide, un poly(chlorure de vinyle), un poly(chlorure de vinylidène), une polyoléfine à modification anhydride ou des combinaisons de deux d'entre eux ou plus ; de préférence, la couche supplémentaire comprenant ou étant produite en utilisant un poly(chlorure de vinyle), un polyester ou leurs combinaisons ; et, mieux encore, la couche supplémentaire comprenant ou étant produite en utilisant un poly(téréphtalate d'éthylène).

10. Structure multicouche selon la revendication 9, laquelle représente un tissu thermoformable.

11. Emballage comprenant au moins une couche comprenant ou produite en utilisant une composition ; au moins une couche comprenant ou produite en utilisant un copolymère d'acrylonitrile-acrylate de méthyle modifié en résistance aux chocs ; et au moins une couche supplémentaire comprenant une feuille, du carton, un polyéthylène à densité élevée, un polypropylène, un polystyrène à haute résistance aux chocs, un poly(téréphtalate d'éthylène) amorphe, un poly-(téréphtalate d'éthylène) cristallin, un poly(chlorure de vinyle), un homopolymère de polyacrylonitrile, un copolymère de polyacrylonitrile, un polyacétal, un copolymère de polyacétal ou des combinaisons de deux d'entre eux ou plus, l'emballage en question comprenant un empaquetage alvéolaire thermoformé, une poche, un conteneur rigide ou des combinaisons de deux d'entre eux ou plus ; la composition étant telle que définie dans la revendication 1, 2, 3, 4, 5, 6, 7 ou 8 ; et la couche supplémentaire comprenant, de préférence, un poly-(chlorure de vinyle), un polyester ou leurs combinaisons.

12. Emballage selon la revendication 11, comprenant, (1) un conteneur comprenant un copolymère d'acrylonitrile-acrylate de méthyle modifié en résistance aux chocs, et (2) un couvercle détachable, le couvercle comprenant ou étant produit en utilisant une structure multicouche qui comprend au moins une couche comprenant la composition et la couche supplémentaire.
